# EUROPEAN PATENT SPECIFICATION

(11) **EP 3 042 126 B1**
(45) Date of publication and mention of the grant of the patent: **28.08.2019**
(21) Application number: 14733098.9
(22) Date of filing: 25.04.2014
(51) Int. Cl.: F24C 15/34, F16L 59/02

(54) **AN INSULATED ARTICLE**
ISOLIERTER GEGENSTAND
ARTICLE ISOLÉ

(30) Priority: 06.09.2013 GB 201315960
(43) Date of publication of application: 13.07.2016
(73) Proprietor: D&A Concept Design Limited, Dublin (IE)
(72) Inventor: DOYLE, Anthony, County Dublin (IE); DOHERTY, David, County Dublin (IE)
(74) Representative: O'Connor, Michael Donal
(86) International application number: PCT/EP2014/058522
(87) International publication number: WO 2015/032511

(56) References cited:
- EP-A2- 0 475 285
- WO-A1-2013/083474
- DE-A1-102010 031 249
- DE-U1- 29 511 926
- DE-U1- 29 511 926
- DE-U1-202008 000 135
- DE-U1-202008 000 135
- US-A- 4 221 672

## Description

### Technical Field:

This invention relates to insulated articles.

### Background Art:

It has been known for many years to insulate articles such as, but not limited to, hot water cylinders and beverage containers. Typically, water cylinders are provided with an external jacket of insulating material that surrounds the cylinder and beverage containers are provided with a double outer skin with an evacuated chamber intermediate the skins. The insulation allows the contents of the article to remain at the desired temperature for longer. Furthermore, the insulation obviates the possibility of individuals burning their hands when handling the articles.

There are problems however with many of the known insulated articles. First of all, beverage containers that have an evacuated chamber between a double outer skin have been known to explode violently if subjected to a significant impact. Secondly, lagging jackets of insulating material are often unsightly and if they are physically separate from the water cylinder, they can be difficult to install when the water cylinder is in situ. Thirdly, the known techniques for insulating articles described above are not suitable for many articles of manufacture that may benefit from being provided with insulation. EP0475285 describes an oven comprising a walled enclosure and an insulation layer of aerogel material.

It is an object of the present invention to provide insulated articles that overcome at least some of the problems associated with the known insulated articles. It is a further object of the present invention to provide insulated articles that offer a useful alternative choice to the consumer.

### Summary of Invention

According to the invention there is provided an oven comprising a walled enclosure having a sealable aperture providing an access passageway to the interior of the walled enclosure, and a door for selectively sealing the sealable aperture, a heating element, a thermostat and a heating element controller responsive to the thermostat, characterised in that the walls of the walled enclosure and the door each comprise an inner layer, an outer layer, and an insulation layer intermediate the inner layer and the outer layer, in which the insulation layer comprises an aerogel material encapsulated in a packaging material and in which the packaging material encapsulating the aerogel material comprises a metal foil material.

By having such an oven with an aerogel material insulation layer intermediate the inner and outer layers of the oven walls and door, there will be provided a highly efficient and energy saving oven. Once the oven is up to the desired temperature, the heating element can be switched off and the contents in the oven will continue to cook at or near the set temperature for longer than would otherwise be the case. The oven will maintain the desired temperature for longer thereby requiring less electricity to power the oven and also requiring the heating element in the oven to be switched on and off less frequently, improving the longevity of the oven components and reducing the maintenance costs. Furthermore, by providing an insulation layer comprising an aerogel material encapsulated in a packaging material, it will be possible to handle the aerogel material with greater ease the manufacture of the oven will be facilitated. Furthermore, the packaging material may provide additional insulation to the oven.

In one embodiment of the invention there is provided an oven in which the aerogel material comprises silica aerogel. Silica aerogel is seen as particularly useful due to the fact that it is flexible and can withstand very high temperatures. Preferably, the aerogel is coated with a high temperature silicon spray to keep the dust levels down during manufacture.

In one embodiment of the invention there is provided an oven in which the aerogel material is glass fibre silica aerogel.

In one embodiment of the invention there is provided an oven in which the aerogel material is glass fibre continuous filament silica aerogel. By using a glass fibre continuous filament aerogel, the aerogel will be more pliable and easier to manipulate in the manufacturing process.

In one embodiment of the invention there is provided an oven in which the silica aerogel is one of a mat silica aerogel and a fabric silica aerogel.

In one embodiment of the invention, there is provided an oven in which the packaging material comprises a metal foil material. In a further embodiment of the invention, the packaging material comprises a Teflon ® coated fabric material.

In one embodiment of the invention there is provided an oven in which the insulation layer of the door comprises transparent silica aerogel and the packaging material is transparent. By using a transparent silica aerogel, it will be possible to insulate the front door of the oven and still allow the goods inside the oven to be viewed during the cooking process without having to open the door. This is a significant improvement on the existing offerings.

In one embodiment of the invention there is provided an oven in which the heating element comprises an infra-red heating element.

In one embodiment of the invention there is provided an oven in which there is provided a camera mounted inside the oven and a visual display in communication with the camera and operable to display the image captured by the camera. This is seen as a useful alternative to providing a viewing window in the front door of the oven and will allow translucent aerogel, foil and other materials to be used in the insulation layer in the oven door.

### Brief Description of the Drawings:

The invention will now be more clearly understood from the following description of some embodiments thereof given by way of example only with reference to the accompanying drawings, in which:-
Figure 1 is a diagrammatic perspective view of an oven according to the invention;
Figure 2 is a diagrammatic perspective view of a second embodiment of oven according to the invention;
Figure 3 is a diagrammatic perspective view of an immersion heater not part of the invention;
Figure 4 is a diagrammatic perspective view of a flask not part of the invention;
Figure 5 is a diagrammatic plan view of a food storage container not part of the invention;
Figure 6 is a diagrammatic perspective view of a radiator not part of the invention;
Figure 7 is perspective view of an insulation layer for a radiator not part of the invention;
Figure 8 is a diagrammatic perspective view of a fireplace not part of the invention; and
Figure 9 is a perspective view of a lagging jacket not part of the invention.

### Detailed Description of the Drawings:

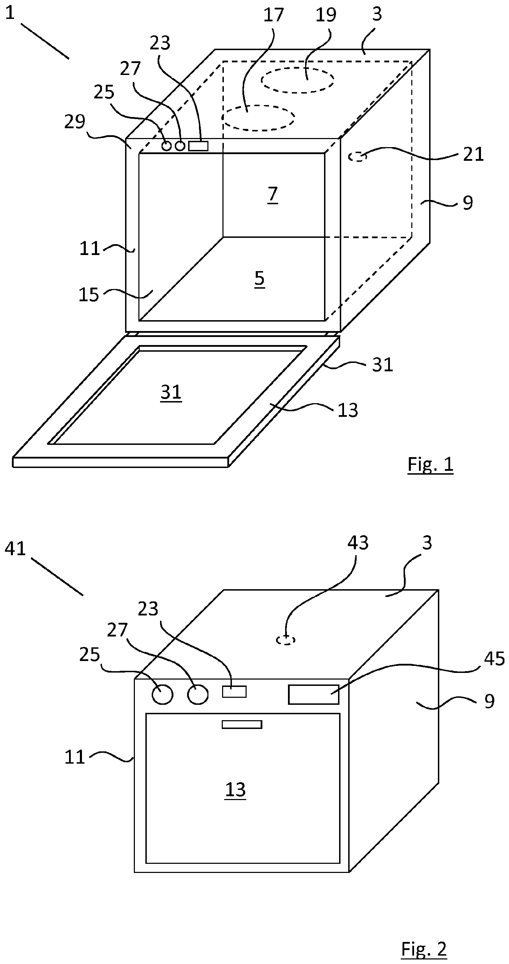

Referring to Figure 1, there is shown an insulated article, in this instance an oven, indicated generally by the reference numeral 1, comprising a substantially cuboid body having a top wall 3, a bottom wall 5, a rear wall 7, a pair of side walls 9, 11 and a front door 13 operable to selectively seal an aperture 15 which provides an access passageway into the interior of the oven 1. The oven comprises a pair of heating elements, in this case infra-red lamps 17, 19, a thermostat 21 and a heating element controller 23 responsive to the thermostat and operable to control the heating elements 17, 19. A control panel having controls 25, 27 such as those commonly known in the art is provided on the front of the oven 1 to allow selection of oven function and desired temperature.

The walls 3, 5, 7, 9, 11 and the front door 13 each comprise an inner layer and an outer layer and an insulation layer 29, 31 respectively intermediate the inner layer and the outer layer. The insulation layer comprises an aerogel material, in this case silica aerogel material. The insulation layer 31 in the door 13 comprises, at least in part, transparent silica aerogel, to allow food cooking inside the oven to be viewed through the transparent insulation layer as the food cooks without the chef having to open the door.

The insulation layers are covered in a packaging material (not shown) which is a metal foil material such as an aluminium (silver) foil or similar type of foil and may comprise a Teflon ® fabric or a Teflon ® coated fabric. The insulation layer 31 in the door 13 may be covered with a transparent packaging material such as a transparent plastic wrap. In addition to providing a Teflon ® coated fabric, other coatings could be provided on the fabric packaging material that would contain the dust particles from the aerogel material. In this way, handling of the aerogel will be facilitated.

Referring to Figure 2, there is shown an alternative embodiment of oven, indicated generally by the reference numeral 41, where like parts have been given the same reference numeral as before. The oven 41 differs from the oven 1 illustrated in Figure 1 in that the insulation layer 31 in the door is not constructed from a transparent silica aerogel and instead there is provided a camera 43 and a monitor 45 in communication with the camera 43 and operable to display the images captured by the camera.

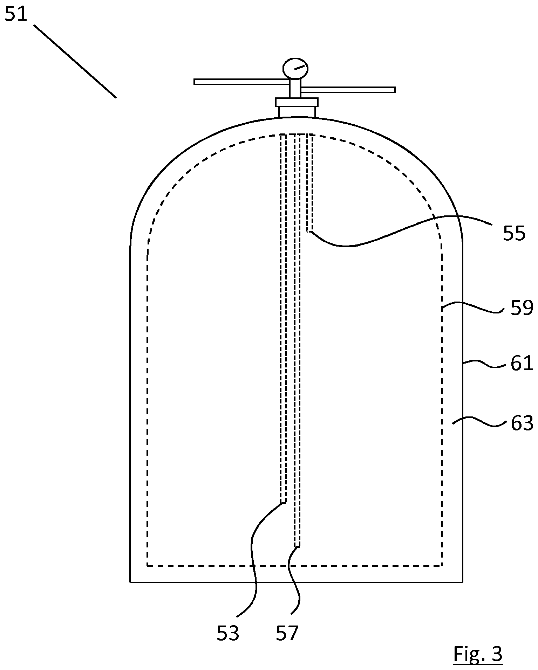

Referring to Figure 3, there is shown a further insulated article, in this instance a hot water cylinder, more specifically an immersion tank, indicated generally by the reference numeral 51. The immersion tank 51 comprises a charging aperture 53 for cold water, a discharge aperture 55 for hot water, and a heating element 57 for heating water in the tank. The immersion tank 51 comprises an inner wall 59 shown in dashed outline, an outer wall 61, and an insulation layer 63 of aerogel material therebetween. The insulation layer of aerogel material is packaged in a packaging material such as metal foil or metal foil and Teflon ® coated fabric.

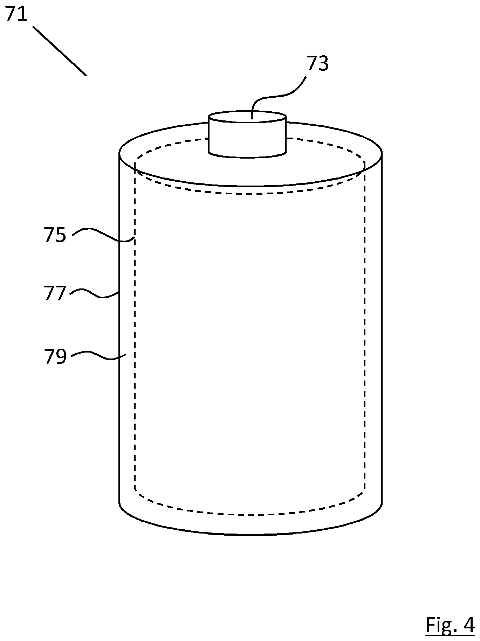

Referring to Figure 4, there is shown a diagrammatic representation of another insulated article not part of the present invention, in this case a liquid container, more specifically a flask, indicated generally by the reference numeral 71. The flask 71 comprises an aperture (not shown) for charging and discharging liquid to and from the container, and a closure 73 for the aperture selectively operable to substantially seal the flask or in the alternative to allow the filling or emptying of the liquid container. The flask 71 comprises an inner wall 75 shown in dashed outline, an outer wall 77, and an insulation layer 79 encapsulated in a packaging material therebetween. The closure 73 also comprises an inner closure wall, an outer closure wall and an insulation layer encapsulated in a packaging material therebetween. The insulation layers in the closure 73 and the main flask body 71 each comprise an aerogel material.

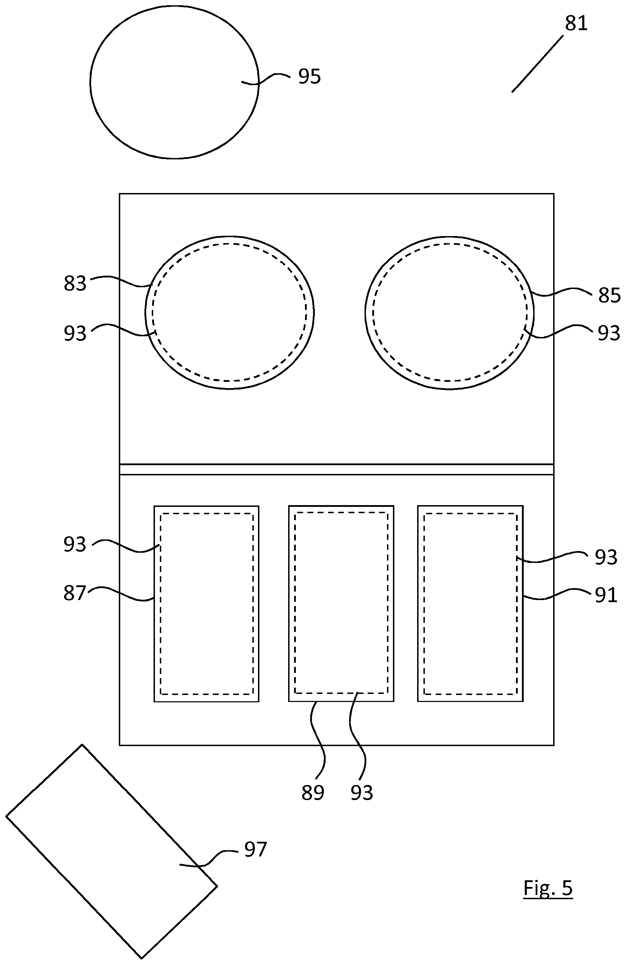

Referring to Figure 5, there is shown a diagrammatic representation of a further still insulated article not part of the present invention, in this case a food storage container, indicated generally by the reference numeral 81. The food storage container 81 comprises a plurality of compartments 83, 85, 87, 89, 91. The compartments each comprise an inner wall illustrated by dashed outline, an outer wall illustrated by solid outline, and an insulation layer 93 encapsulated in a packaging material therebetween. A pair of closures is shown, a first closure 95 for the compartment 83 and a second closure 97 for the compartment 87. The remaining compartments 85, 89, 91 are also provided with suitable closures (not shown). The closures 95, 97 each comprise an inner closure wall, an outer closure wall and an insulation layer therebetween. The insulation layer 93 and the insulation layer between the outer closure wall and inner closure wall of the closure each comprise an aerogel material encapsulated in a packaging material, such as a metal foil or metal foil and a Teflon ® coated fabric. In the embodiment shown, the compartments are provided in a number of different shapes and sizes. If desired, the compartments may all be of the same size as each other or indeed there could be other sizes and shapes of compartment than those shown in Figure 5.

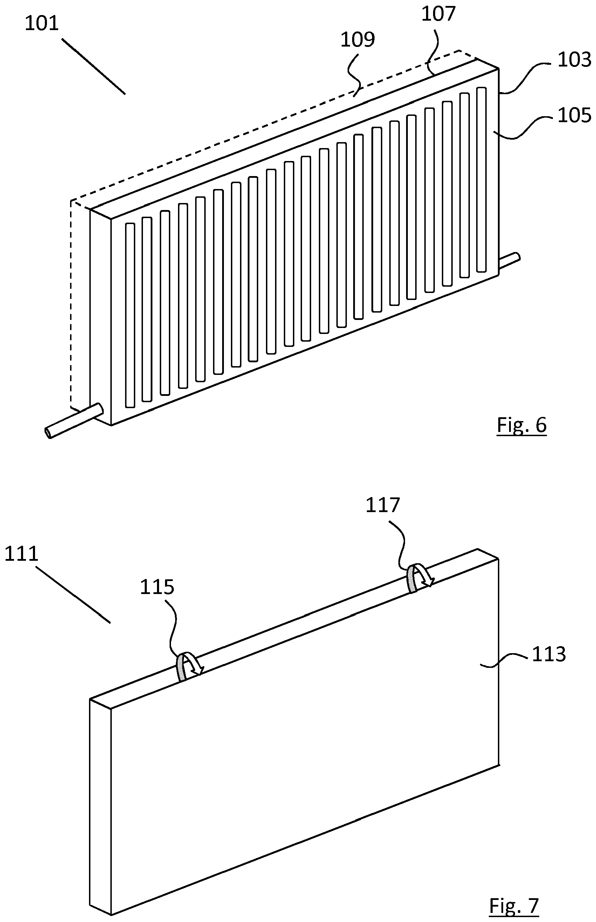

Referring to Figure 6, there is shown a diagrammatic representation of another still insulated article not part of the present invention, in this case a hot water radiator, indicated generally by the reference numeral 101. The hot water radiator comprises a body 103 defining an internal chamber (not shown) for hot water, the body 103 having a front face 105 and a rear face 107. There is further provided a layer of insulation 109 mounted adjacent the rear face 107 of the radiator 101, the layer of insulation 109 comprising a layer of aerogel material encapsulated in a packaging material. The radiator thus described will encourage the heat of the radiator to be radiated outwardly from the front face 105 of the radiator rather than being wasted by being radiated backwards through the rear face 107.

Referring to Figure 7, there is shown a diagrammatic representation of an insulation layer for a radiator, indicated generally by the reference numeral 111. The insulation layer 111 comprises a sheet of aerogel material, preferably a glass fibre continuous filament silica aerogel in either mat or fabric layer form, encased in a pouch 113 of Teflon (Registered Trade Mark ®) fabric. The insulation layer 111 comprises a pair of hooks 115, 117 for mounting the insulation layer on a radiator. It is envisaged that this embodiment will be particularly suited for zoned heating installations where radiators in one or more rooms may be on at different times to other radiators and the construction shown will allow the insulation layer to be moveable to a desired location.

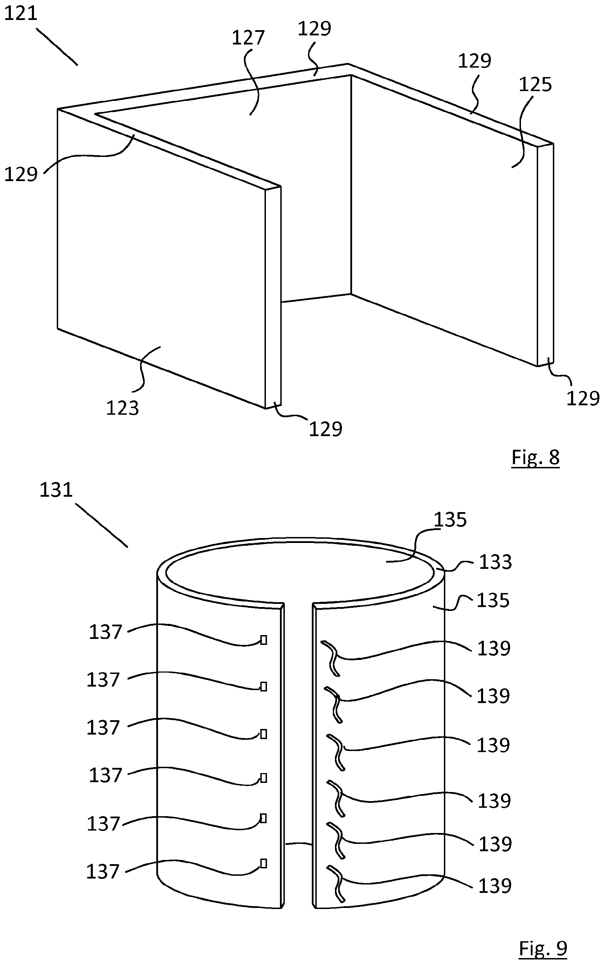

Referring to Figure 8, there is shown a diagrammatic representation of another still insulated article not part of the present invention, in this case a fireplace surround, indicated generally by the reference numeral 121. The fireplace surround 121 comprises a pair of side walls 123, 125 bridged by a rear wall 127. The side walls 123, 125 and the rear wall 127 each comprise an inner layer, an outer layer, and an insulation layer 129 encapsulated in a packaging material intermediate the inner layer and the outer layer. Again, the insulation layer 129 comprises an aerogel material, preferably silica aerogel, ideally glass fibre silica aerogel and the packaging material comprises a metal foil and/or a Teflon ® coated fabric. In use, the fireplace surround 121 can be placed behind and surrounding the fireplace (not shown) so that heat from the fireplace is directed forwards and outwardly into the room in which the fireplace is located.

Referring to Figure 9, there is shown a diagrammatic representation of another insulated article, not part of the invention, in this case a lagging jacket for a hot water cylinder, indicated generally by the reference numeral 131. The lagging jacket comprises an insulation layer 133 housed in a pouch 135 of packaging material. There is provided means to secure the lagging jacket 131 in position relative to a hot water cylinder (not shown), in this case provided by way of buckles 137 and straps 139. The insulation layer comprising an aerogel material. If desired, the lagging jacket may taper inwardly at the top of the lagging jacket and/or a draw-string (not shown) may be provided around the top of the lagging jacket to draw the top of the lagging jacket inwardly to encapsulate a hot water cylinder (not shown).

In this specification the terms "comprise, comprises, comprised and comprising" and the terms "include, includes, included and including" are all deemed totally interchangeable and should be afforded the widest possible interpretation.

## Claims

1. An oven (1) comprising a walled enclosure having a sealable aperture (15) providing an access passageway to the interior of the walled enclosure, and a door (13) for selectively sealing the sealable aperture, a heating element (17, 19), a thermostat (21) and a heating element controller (23) responsive to the thermostat, wherein the walls (3, 5, 7, 9, 11) of the walled enclosure and the door (13) each comprise an inner layer, an outer layer, and an insulation layer (29, 31) intermediate the inner layer and the outer layer, in which the insulation layer comprises an aerogel material, **characterized in that** the aerogel material is encapsulated in a packaging material and **in that** the packaging material encapsulating the aerogel material comprises a metal foil material.

2. An oven (1) as claimed in claim 1 in which the aerogel material comprises silica aerogel.

3. An oven (1) as claimed in claim 1 or 2 in which the aerogel material is glass fibre silica aerogel.

4. An oven (1) as claimed in any preceding claim in which the aerogel material is glass fibre continuous filament silica aerogel.

5. An oven (1) as claimed in any of claims 2 to 4 in which the silica aerogel is one of a mat silica aerogel and a fabric silica aerogel.

6. An oven (1) as claimed in any preceding claim in which the packaging material encapsulating the aerogel material comprises a Teflon ® coated fabric.

7. An oven (1) as claimed in claim 2 in which the insulation layer of the door comprises transparent silica aerogel and the packaging material is transparent.

8. An oven (1) as claimed in any preceding claim in which the heating element (17, 19) comprises an infra-red heating element.

9. An oven (1) as claimed in any preceding claim in which there is provided a camera (43) mounted inside the oven and a visual display (45) in communication with the camera and operable to display the image captured by the camera.

## Patentansprüche

1. Ofen (1), umfassend ein von Wänden umgebenes Gehäuse mit einer verschließbaren Öffnung (15), die einen Zugangsdurchgang zum Inneren des von Wänden umgebenen Gehäuses bereitstellt, und eine Tür (13) zum selektiven Verschließen der verschließbaren Öffnung, ein Heizelement (17, 19), einen Thermostat (21) und einen auf den Thermostat ansprechenden Heizelementregler (23), wobei die Wände (3, 5, 7, 9, 11) des von Wänden umgebenen Gehäuses und die Tür (13) jeweils eine innere Schicht, eine äußere Schicht und eine Dämmschicht (29, 31) zwischen der inneren Schicht und der äußeren Schicht umfassen, wobei die Dämmschicht ein Aerogelmaterial umfasst, **dadurch gekennzeichnet, dass** das Aerogelmaterial in einem Verpackungsmaterial eingeschlossen ist und dass das das Aerogelmaterial einschließende Verpackungsmaterial ein Metallfolienmaterial umfasst.

2. Ofen (1) nach Anspruch 1, wobei das Aerogelmaterial Kieselsäure-Aerogel umfasst.

3. Ofen (1) nach Anspruch 1 oder 2, wobei es sich bei dem Aerogelmaterial um Glasfaser-Kieselsäure-Aerogel handelt.

4. Ofen (1) nach einem der vorangehenden Ansprüche, wobei es sich bei dem Aerogelmaterial um Endlosfaser-Glasfaser-Kieselsäure-Aerogel handelt.

5. Ofen (1) nach einem der Ansprüche 2 bis 4, wobei es sich bei dem Kieselsäure-Aerogel um ein Matten-Kieselsäure-Aerogel oder ein Gewebe-Kieselsäure-Aerogel handelt.

6. Ofen (1) nach einem der vorangehenden Ansprüche, wobei das das Aerogelmaterial einschließende Verpackungsmaterial ein Teflon®-beschichtetes Gewebe umfasst.

7. Ofen (1) nach Anspruch 2, wobei die Dämmschicht der Tür durchsichtiges Kieselsäure-Aerogel umfasst und das Verpackungsmaterial durchsichtig ist.

8. Ofen (1) nach einem der vorangehenden Ansprüche, wobei das Heizelement (17, 19) ein Infrarotheizelement umfasst.

9. Ofen (1) nach einem der vorangehenden Ansprüche, wobei Folgendes bereitgestellt ist: eine in dem Ofen montierte Kamera (43) und eine optische Anzeigevorrichtung (45), die mit der Kamera in Verbindung steht und wirksam ist, um das von der Kamera erfasste Bild anzuzeigen.

## Revendications

1. Four (1) comprenant une enceinte à paroi ayant une ouverture pouvant être scellée (15) fournissant un passage d'accès vers l'intérieur de l'enceinte à paroi, et une porte (13) pour sceller sélectivement l'ouverture pouvant être scellée, un élément chauffant (17, 19), un thermostat (21) et un dispositif de commande d'élément chauffant (23) répondant au thermostat, où les parois (3, 5, 7, 9, 11) de l'enceinte à paroi et la porte (13) comprennent chacune une couche interne, une couche externe et une couche isolante (29, 31) entre la couche interne et la couche externe, dans lequel la couche isolante comprend un matériau aérogel, **caractérisé en ce que** le matériau aérogel est encapsulé dans un matériau de conditionnement et **en ce que** le matériau de conditionnement encapsulant le matériau aérogel comprend un matériau de feuille métallique.

2. Four (1) tel que revendiqué dans la revendication 1 dans lequel le matériau aérogel comprend un aérogel de silice.

3. Four (1) tel que revendiqué dans la revendication 1 ou 2 dans lequel le matériau aérogel est un aérogel de silice à fibre de verre.

4. Four (1) tel que revendiqué dans une quelconque revendication précédente dans lequel le matériau aérogel est un aérogel de silice à filament continu de fibre de verre.

5. Four (1) tel que revendiqué dans l'une quelconque des revendications 2 à 4 dans lequel l'aérogel de silice est un aérogel parmi un tapis d'aérogel de silice et un tissu d'aérogel de silice.

6. Four (1) tel que revendiqué dans une quelconque revendication précédente dans lequel le matériau de conditionnement encapsulant le matériau d'aérogel comprend un tissu revêtu de Téflon®.

7. Four (1) tel que revendiqué dans la revendication 2 dans lequel la couche isolante de la porte comprend un aérogel de silice transparent et le matériau de conditionnement est transparent.

8. Four (1) tel que revendiqué dans une quelconque revendication précédente dans lequel l'élément chauffant (17, 19) comprend un élément chauffant infrarouge.

9. Four (1) tel que revendiqué dans une quelconque revendication précédente dans lequel il est prévu une caméra (43) montée à l'intérieur du four et un affichage visuel (45) en communication avec la caméra et pouvant fonctionner pour afficher l'image saisie par la caméra.
